# DEMANDE DE BREVET EUROPEEN

(11) **EP 2 868 943 A1**
(43) Date de publication de la demande: **06.05.2015**
(21) Numéro de dépôt: 14190549.7
(22) Date de dépôt: 27.10.2014
(51) Int. Cl.: F16D 65/18, F16D 65/54

(54) **Actionneur de freinage pour frein hydraulique de roue d'aéronef**

(30) Priorité: 04.11.2013 FR 1360792
(71) Demandeur: Messier-Bugatti-Dowty, 78140 Vélizy-Villacoublay (FR)
(72) Inventeur: Bussiere, Jacques, 78140 Velizy-Villacoublay (FR); Gonzalez, Vincent, 78140 Velizy-Villacoublay (FR); De Crescenzo, Marie-Laure, 78140 Velizy-Villacoublay (FR)
(74) Mandataire: Parzy, Benjamin Alain

(57) **Abrégé**

L'invention est relative à un actionneur de freinage pour frein hydraulique d'aéronef, destiné à être reçu dans l'une des cavités d'une couronne du frein, l'actionneur comprenant
- une chemise (1) adaptée à être reçue à étanchéité dans la cavité de la couronne ;
- un piston (3) monté à coulissement étanche dans la chemise selon un axe de coulissement pour appliquer un effort de freinage lors de l'introduction d'un fluide sous pression dans la cavité ;
- un dispositif de rattrapage d'usure (10) qui définit une position de retrait du piston dans la chemise au moyen d' une butée (11) mobile axialement pouvant être avancée par le piston lors de l'application d'un effort de freinage et en relation de friction avec une partie fixe du dispositif de rattrapage d'usure (18) solidaire de la chemise ;
- un organe élastique (24) de rappel du piston vers la position de retrait définie par appui du piston sur la butée mobile ;

la butée mobile étant en relation de friction avec la partie fixe par l'intermédiaire d'au moins un élément intermédiaire télescopique (16) interposé entre la butée mobile (11) et la partie fixe (18).

## Description

L'invention concerne un actionneur de freinage pour frein hydraulique de roue d'aéronef.

### ARRIERE-PLAN TECHNOLOGIQUE DE L'INVENTION

Les freins hydrauliques utilisés pour freiner les roues des aéronefs comprennent généralement une couronne présentant des multiples cavités dans lesquels des actionneurs de freinage sont rapportés de manière amovible. Chacun des actionneurs comprend une chemise qui est rapportée à étanchéité dans l'une des cavités de la couronne et dans laquelle un piston est monté à coulissement étanche selon un axe de coulissement. La couronne distribue du fluide hydraulique sous pression à toutes ses cavités, fluide qui agit sur le piston pour le faire sortir et appliquer un effort de freinage sur des éléments de friction s'étendant en regard de la couronne, dont des rotors qui tournent avec la roue, et des stators qui sont immobiles en rotation.

Le piston présente en général une course opérationnelle qu'il parcourt lors de l'application d'un effort de freinage. Cette course opérationnelle, de l'ordre de quelques millimètres, est suffisante pour permettre l'application de l'effort de freinage sur les éléments de friction, et le recul du poussoir de façon à permettre la libre rotation des rotors. A cet effet, un ressort s'étendant à l'intérieur du piston assure le recul du poussoir jusqu'à une position de retrait lorsque l'effort de freinage n'est plus appliqué.

Cependant, les éléments de friction s'usant progressivement à la suite de l'application répétée d'efforts de freinage, il importe de faire en sorte que le piston se trouve toujours à proximité des éléments de friction. Pour ce faire, il est connu d'équiper les actionneurs de freinage d'un dispositif de rattrapage d'usure qui s'étend à l'intérieur du piston. Le dispositif de rattrapage d'usure comprend une butée mobile qui est montée coulissante avec friction selon l'axe de coulissement sur une tige centrale s'étendant dans le piston et qui définit la position de retrait du piston.

Lors de l'application d'un effort de freinage, le piston est poussé vers les éléments de friction et, le cas échéant, entraîne la butée mobile avec lui en vainquant la friction entre la tige et la butée, ce qui provoque l'avancement de la butée mobile sur la tige. Lorsque l'effort est relâché, le ressort, qui s'étend entre la butée mobile et le piston, fait reculer le piston jusqu'à la nouvelle position de retrait, qui a avancé du fait de l'avancée de la butée mobile.

La friction peut être organisée par différents moyens, comme par exemple l'interposition de bagues de friction entre la butée et la tige centrale, ou encore l'interposition d'une douille déformable coopérant avec une olive qui déforme radialement la douille à chaque avancée de la butée mobile.

Il existe essentiellement deux technologies pour ce type d'actionneur de freinage. Dans l'une d'elles dite à piston humide, le fluide hydraulique est admis à l'intérieur du piston et baigne le système de rattrapage d'usure. Ces actionneurs sont simples, mais ont pour inconvénient que le fluide s'étend dans des zones proches de l'extrémité du piston qui est soumise à des températures élevées du fait de l'échauffement par frottement des éléments de friction du frein. Il en résulte une altération partielle des caractéristiques physico-chimiques du fluide hydraulique, ce qui peut dégrader à terme les performances du freinage.

Dans l'autre des technologies dites à piston sec, un joint d'étanchéité est interposé entre le piston et la tige centrale, de sorte que le fluide reste confiné en arrière du piston et ne baigne plus le dispositif d'usure. Cependant, une telle technologie nécessite l'utilisation d'un joint supplémentaire qui pose d'autres problèmes d'usure en utilisation.

### OBJET DE L'INVENTION

L'invention a pour objet de proposer un actionneur de freinage pour frein hydraulique d'aéronef ne comportant pas les inconvénients précités.

### PRESENTATION DE L'INVENTION

En vue de la réalisation de ce but, on propose un actionneur de freinage pour frein hydraulique d'aéronef, destiné à être reçu dans l'une des cavités d'une couronne du frein, l'actionneur comprenant
- une chemise adaptée à être reçue à étanchéité dans la cavité de la couronne ;
- un piston monté à coulissement étanche dans la chemise selon un axe de coulissement pour appliquer un effort de freinage lors de l'introduction d'un fluide sous pression dans la cavité ;
- un dispositif de rattrapage d'usure qui définit une position de retrait du piston dans la chemise au moyen d' une butée mobile axialement pouvant être avancée par le piston lors de l'application d'un effort de freinage et en relation de friction avec une partie fixe du dispositif de rattrapage d'usure solidaire de la chemise;
- un organe élastique de rappel du piston vers la position de retrait prenant appui sur la butée mobile ;
dans lequel, selon l'invention, la butée mobile est en relation de friction avec la partie fixe par l'intermédiaire d'au moins un élément télescopique interposé entre la butée mobile et la partie fixe.

Grâce à l'élément télescopique, le mécanisme de rattrapage d'usure est plus compact. Le piston peut alors être équipé, au-delà du mécanisme de rattrapage d'usure, d'une paroi qui confine le fluide hydraulique et l'empêche de s'étendre au niveau de l'extrémité distale du piston, subissant les flux de chaleurs en provenance des éléments de friction.

### BREVE DESCRIPTION DES FIGURES

L'invention sera mieux comprise à la lumière de la description qui suit en référence aux figures des dessins annexés, parmi lesquelles :
- la figure 1 est une vue en coupe d'un actionneur de freinage selon l'invention illustré en place dans une couronne d'un frein hydraulique d'aéronef ;
- la figure 2 est une figure analogue à la figure 1, l'actionneur étant illustré lors de l'application d'un effort de freinage ;
- la figure 3 est une figure analogue à la figure 2, l'actionneur étant illustré après relâchement de l'effort de freinage.
- La figure 4 est une figure analogue à la figure 1, la butée mobile ayant avancé de sensiblement la moitié de sa course ;
- La figure 5 est une figure analogue à la figure 4, la butée mobile ayant avancé de la totalité de sa course

### DESCRIPTION DETAILLEE DE L'INVENTION

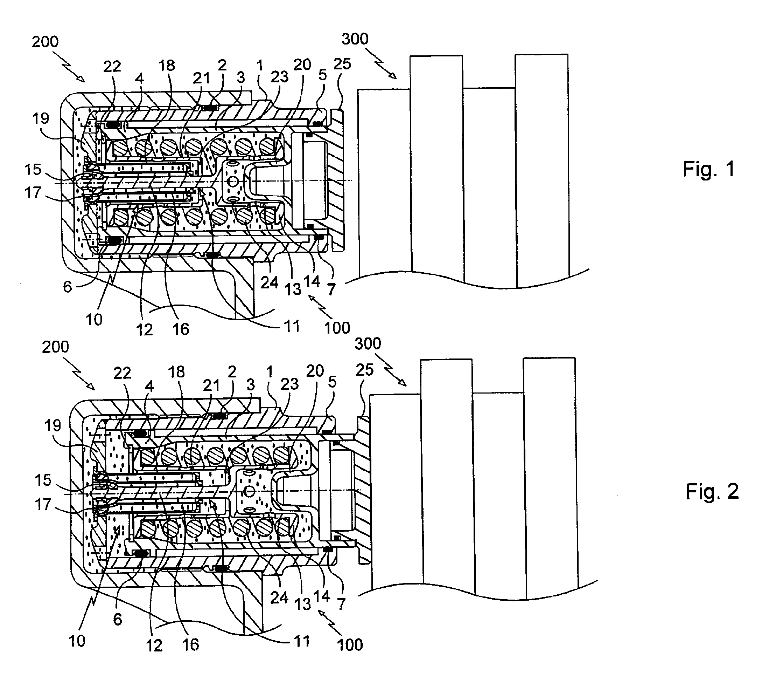

En référence à la figure 1, l'actionneur de freinage 100 de l'invention est destiné à être reçu dans l'une des cavités 200 d'une couronne d'un frein hydraulique d'aéronef, comportant par ailleurs des éléments de friction 300 comportant une succession de disques rotors et de disques stators, par exemple des disques en carbone, sur lesquels l'actionneur exerce sélectivement un effort de freinage lors de l'admission de fluide sous pression (illustré par des points) dans la cavité 200.

L'actionneur 100 comporte tout d'abord une chemise 1 généralement cylindrique qui est reçue à étanchéité dans la cavité 200 de la couronne. A cet effet, un joint d'étanchéité 2 coopère avec une face externe de la chemise pour contenir le fluide hydraulique dans la cavité.

Un piston 3 est monté pour coulisser dans la chemise 1 selon un axe de coulissement X. A cet effet, l'extrémité proximale 4 du piston 3 est conformée en palier qui s'étend à ajustement contre une face interne de la chemise 1. L'extrémité distale 5 de la chemise 1 est conformée en palier pour guider le piston 3. L'extrémité proximale 4 du piston 1 est munie d'un joint d'étanchéité 6, tandis que l'extrémité distale 5 de la chemise 1 est munie d'un racleur 7.

L'actionneur 100 est muni d'un dispositif de rattrapage d'usure 10 qui comprend une butée mobile 11 qui ici comporte une tige centrale 12 prolongée d'une cloche 13 se terminant par un redan 14. L'extrémité de la tige centrale 12 porte une olive 15 à surface externe sphérique qui coopère avec une première douille déformable 16 qui s'étend autour de la tige centrale 12. L'olive 15 est d'un diamètre supérieur à un diamètre interne de la première douille déformable 16, de sorte que le déplacement de l'olive 15 dans la première douille déformable 16 provoque la déformation radiale de la première douille déformable, ce qui génère un effort de friction suffisant pour retenir la première douille en position en l'absence de sollicitation externe. La première douille déformable 16 porte également une olive 17 qui coopère avec une deuxième douille déformable 18 qui s'étend autour de la première douille déformable 16 et qui est solidaire d'un fond 19 rapporté sur l'extrémité proximale de la chemise 1. La deuxième douille déformable 18 est donc fixe relativement à la chemise 1.

La première douille déformable 16 forme donc un élément intermédiaire télescopique du dispositif de rattrapage d'usure. Comme cela est visible, l'ensemble est particulièrement compact et permet d'équiper le piston 3 d'une paroi étanche 20 qui empêche le fluide de s'étendre à proximité d'un patin 25 porté par l'extrémité distale du piston 3.

Par ailleurs, le piston 3 est équipé d'une cage interne 21 qui est arrêtée sur le piston 3 au moyen d'un segment d'arrêt 22 et qui se termine par un rebord 23 qui s'étend avec un jeu correspondant à la course opérationnelle du piston 3 en regard de la cloche 13 de la butée mobile 11. Un ressort 24 s'étend entre le redan 14 de la butée mobile 11 et une paroi d'extrémité de la cage 21.

En situation de repos, le ressort 24 repousse le piston 3 jusqu'à la position de retrait illustrée à la figure 1, définie par l'appui de la paroi étanche 20 contre la butée mobile 11.

Le fonctionnement de l'actionneur de freinage de l'invention est le suivant. Partant de la position de retrait illustrée à la figure 1, on applique un effort de freinage en admettant du fluide sous pression dans la cavité 200. Le fluide repousse le piston 3 vers les disques 300. Si, avant de toucher les disques 300, le rebord de la cage 21 vient buter contre la cloche 13 de la butée mobile 11, celle-ci est avancée par le piston 3 à l'encontre de la friction générée par la déformation radiale qu'impose l'olive 15 de la butée mobile à la première douille déformable 16, jusqu'à contact du piston 3 avec les disques 300, comme illustré à la figure 2.

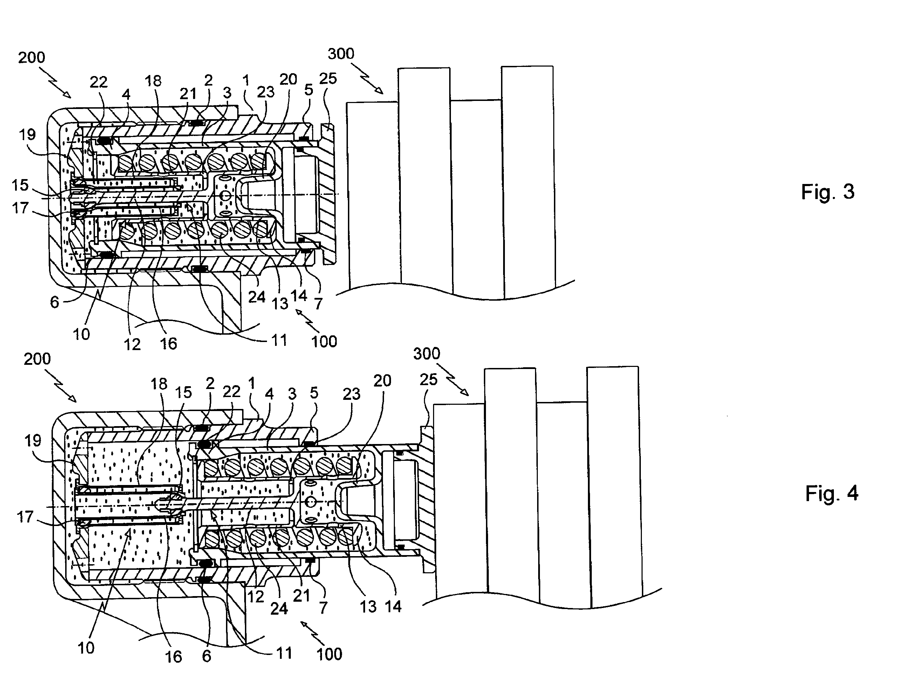

Puis, quand l'effort de freinage est relâché, le piston revient sous l'effet du ressort 24, jusqu'à ce que la paroi étanche 20 vienne en appui contre la butée mobile 11, définissant ainsi une nouvelle position de retrait, avancée par rapport à la précédente, comme illustré à la figure 3. La course opérationnelle du piston (entre la position de la figure 2 et la position de la figure 3) est inchangée, seule la position de retrait ayant légèrement avancé pour compenser l'usure des disques 300.

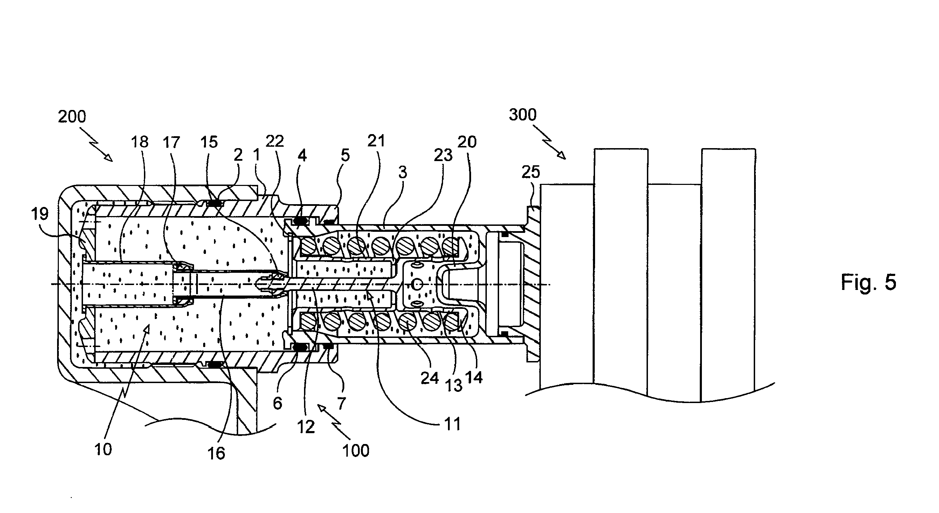

Au cours de la vie des freins, l'usure des disques sera suffisamment importante pour que la butée mobile 11 ait avancé au point que l'olive 15 de la butée mobile 11 vienne en butée contre un redan d'extrémité de la première douille déformable 16, comme illustré à la figure 4. Dès lors, la première douille 16 va être entraînée avec la butée mobile dans son avancement progressif, la friction étant maintenant obtenue par déformation de la deuxième douille déformable 18, fixe, par l'olive 17 solidaire de la première douille déformable 16 qui se déplace avec la butée mobile 11, jusqu'à l'avancée maximale illustrée à la figure 5.

Dans cette situation, il convient alors de re-conditionner l'actionneur en remplaçant les deux douilles qui ont été déformées, et en réinitialisant le piston dans la chemise. Bien entendu, l'ordre de déformation des deux douilles dépend de leurs rigidités relatives. Si, contrairement à ce qui a été supposé ici, la déformation de la première douille déformable 16 est plus difficile que celle de la deuxième douille déformable 18, alors la première douille déformable 16 va se déplacer en premier en suivant le piston 3. Ce n'est qu'après que le piston va se déplacer relativement à la première douille déformable.

Si les déformations sont d'égale intensité, les deux déplacements relatifs (première douille déformable 16/deuxième douille déformable 18 et piston 3/première douille déformable 16) auront certainement lieu simultanément.

L'invention n'est pas limitée à ce qui vient d'être décrit, mais englobe au contraire toute variante entrant dans le cadre défini par les revendications.

En particulier, bien que la friction entre d'une part la partie fixe du dispositif de rattrapage d'usure (la deuxième douille 16) et l'élément intermédiaire (la première douille déformable) d'une part, et entre l'élément intermédiaire et la butée mobile d'autre part sont ici obtenues par déformation radiale, on pourra bien sûr utiliser tout autre moyen pour obtenir cet effort de friction propre à arrêter la butée mobile, comme par exemple des bagues de friction.

## Revendications

1. Actionneur de freinage pour frein hydraulique d'aéronef, destiné à être reçu dans l'une des cavités d'une couronne du frein, l'actionneur comprenant
- une chemise (1) adaptée à être reçue à étanchéité dans la cavité de la couronne ;
- un piston (3) monté à coulissement étanche dans la chemise selon un axe de coulissement pour appliquer un effort de freinage lors de l'introduction d'un fluide sous pression dans la cavité ;
- un dispositif de rattrapage d'usure (10) qui définit une position de retrait du piston dans la chemise au moyen d' une butée (11) mobile axialement pouvant être avancée par le piston lors de l'application d'un effort de freinage et en relation de friction avec une partie fixe du dispositif de rattrapage d'usure (18) solidaire de la chemise;
- un organe élastique (24) de rappel du piston vers la position de retrait définie par appui du piston sur la butée mobile ;
**caractérisé en ce que** la butée mobile est en relation de friction avec la partie fixe par l'intermédiaire d'au moins un élément intermédiaire télescopique (16) interposé entre la butée mobile (11) et la partie fixe (18).

2. Actionneur de freinage selon la revendication 1, dans lequel l'élément intermédiaire du dispositif de rattrapage d'usure comprend une première douille (16) déformable radialement, la déformation étant obtenue par coopération de la première douille avec une olive (15) solidaire de la butée mobile.

3. Actionneur de freinage selon la revendication 2, dans lequel la partie fixe du dispositif de rattrapage d'usure comprend une deuxième douille (16) déformable radialement, la déformation étant obtenue par coopération de la deuxième douille avec une olive (17) solidaire de la première douille.

4. Actionneur selon la revendication 2, dans lequel le piston (3) est équipé d'une cage interne (21) formant un appui pour l'organe élastique.

5. Actionneur de freinage selon la revendication 4, dans lequel la cage (21) se termine par un rebord (23) venant en appui contre la butée mobile (11) lors de l'application d'un effort de freinage.

6. Actionneur de freinage selon la revendication 1, dans lequel piston a une extrémité distale (4) fermée et étanche au fluide.

7. Actionneur de freinage selon la revendication 1, dans lequel la chemise a une extrémité distale (5) qui définit un palier de guidage du piston et qui porte un racleur (7).

8. Frein hydraulique pour roue d'aéronef, comportant au moins un actionneur de freinage selon l'une des revendications précédentes.
